Europäisches Patentamt

European Patent Office

Office européen des brevets

(19)

(11) Veröffentlichungsnummer: **0 110 043**
**A2**

(12) **EUROPÄISCHE PATENTANMELDUNG**

(21) Anmeldenummer: **83109354.7**

(22) Anmeldetag: **20.09.83**

(51) Int. Cl.³: **B 60 K 17/10**

(30) Priorität: **28.09.82 DE 3235872**

(43) Veröffentlichungstag der Anmeldung: **13.06.84**
**Patentblatt 84/24**

(84) Benannte Vertragsstaaten: **AT BE DE FR GB IT NL SE**

(71) Anmelder: **Karl Kässbohrer Fahrzeugwerke GmbH, Peter-Schmid-Strasse 13, D-7900 Ulm (Donau) (DE)**

(72) Erfinder: **Haug, Walter, Auf der Winterhalde 5, D-7906 Blaustein 1 (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **Stadtomnibus mit hydrostatischem Antrieb.**

(57) Die Erfindung bezieht sich auf einen Stadtomnibus mit hydrostatischem Antrieb, der wenigstens eine vom Fahrzeugmotor angetriebene Primäreinheit und jeweils eine mit derselben hydraulisch verbundene Sekundäreinheit für den Antrieb eines Rades bzw. Radsatzes jeweils einer Seite jeder Antriebsachse aufweist. Es ist Aufgabe der Erfindung, einen Stadtomnibus der eingangs genannten Art ohne Beeinträchtigung der Fahrleistung so weiterzubilden, daß der Mittelgang durchgehend eben ausgebildet und über das z.Z. mögliche Maß hinaus abgesenkt werden kann. Dies wird dadurch erreicht, daß jede Antriebsachse als Portalachse ausgebildet ist und jede Sekundäreinheit wenigstens zwei mechanisch miteinander gekoppelte und hydraulisch parallel geschaltete Hydromotoren umfaßt, die an der Portalachse so angeordnet sind, daß sie deren tiefer liegenden abgekröpften Teil der Höhe nach im wesentlichen nicht überragen.

Stadtomnibus mit hydrostatischem Antrieb

B e s c h r e i b u n g

Die Erfindung bezieht sich auf einen Stadtomnibus mit hydrostatischem Antrieb, der wenigstens eine vom Fahrzeugmotor angetriebene Primäreinheit und jeweils eine mit derselben hydraulisch verbundene Sekundäreinheit für den Antrieb eines Rades bzw. Radsatzes jeweils einer Seite jeder Antriebsachse aufweist.

Ein derartiger Omnibus ist aus der deutschen Patentschrift 941 955 bekannt, bei dem als Sekundäreinheit jeweils ein Hydromotor in die Radnaben der anzutreibenden Räder eingebaut ist. Durch Wegfall der bei einem mechanischen Antrieb erforderlichen Gelenkwellenleitung und des Differentialgetriebes bietet ein derartiger hydrostatischer Antrieb die Möglichkeit, das Antriebsaggregat, d.h. den Verbrennungsmotor und das Verteilergetriebe, an beliebiger Stelle des Omnibusses unterzubringen.

Es ist außerdem ein Omnibus bekannt geworden, bei dem durch Verwendung von Fahrzeugrädern kleineren Durchmessers versucht wurde, den Mittelgang über das zur Zeit übliche Maß hinaus abzusenken. Hierbei erwiesen sich jedoch die kleineren Räder bzw. deren Bereifungen als zu schwierig beherrschbar bezüglich der erforderlichen Tragfähigkeit, des Verschleisses und insbesondere als zu anfällig gegenüber Verletzungen durch Bordstein-Kanten, die zu einer hohen Ausfallquote führten. Infolgedessen konnte sich dieser Omnibus nicht auf dem Markt durchsetzen. Außerdem war bei diesen Fahrzeugen der Mittelgang nicht durchgehend eben ausgebildet, sondern wies im Bereich hinter der Hinterachse einen Anstieg nach oben auf.

Es ist Aufgabe der Erfindung, einen Stadtomnibus der eingangs genannten Art ohne Beeinträchtigung der Fahrleistung so weiterzubilden, daß der Mittelgang durchgehend eben ausgebildet und über das z.Zt. mögliche Maß hinaus abgesenkt werden kann.

Dies wird dadurch erreicht, daß jede Antriebsachse als Portalachse ausgebildet ist und jede Sekundäreinheit wenigstens zwei mechanisch miteinander gekoppelte und hydraulisch parallelgeschaltete Hydromotoren umfaßt, die an der Portalachse so angeordnet sind, daß sie deren tiefer liegenden abgekröpften Teil der Höhe nach im wesentlichen nicht überragen.

Die Portalachse schafft die Voraussetzung, den Mittelgang auf das theoretisch erzielbare, im wesentlichen durch die erforderliche Bodenfreiheit begrenzte und bisher nicht erreichte Tiefstmaß abzusenken. Durch die Verwendung zweier oder mehrerer hydraulisch parallelgeschalteter Hydromotoren anstelle eines einzigen Motors als Sekundäreinheit wird deren Durchmesser, d.h. Höhenanspruch in Abhängigkeit von der Anzahl der verwendeten Hydromotoren verringert. Durch Reduzierung dieses Höhenanspruches auf etwa ein dem Durchmesser des tiefer liegenden abgekröpften Teils der Portalachse entsprechendes Maß kann die Sekundäreinheit so an der Portalachse angeordnet werden, daß sie den tiefer liegenden abgekröpften Teil der Portalachse der Höhe nach im wesentlichen nicht überragt. Eine volle Ausnutzung der Vorteile einer Portalachse ist nun möglich. Der Mittelgang kann durchgehend eben ausgebildet und abgesehen vom erforderlichen Federweg bis zum theoretisch erzielbaren Tiefstmaß abgesenkt werden. Durch die Verwendung einer Sekundäreinheit mit mehreren Hydromotoren anstatt lediglich eines Motors wird nicht nur die Fahrleistung nicht beeinträchtigt, sondern die mögliche Fahrgeschwindigkeit heraufgesetzt.

Eine vorteilhafte Lösung für die Unterbringung der Hydromotoren ergibt sich dadurch, daß der tiefer liegende abgekröpfte Teil der Portalachse hohl ausgebildet ist und die Sekundäreinheiten mit jeweils hintereinander angeordneten Hydromotoren innerhalb dieses Teils der Achse aufgenommen sind. Es entsteht somit eine kompakte Einheit, die zu Reparaturzwecken beispielsweise leicht ein- und ausgebaut werden kann. Es entfallen weiterhin die Gehäuse für mindestens vier Hydromotoren, wodurch eine erhebliche Gewichtseinsparung erzielt wird. Gleichzeitig wird durch die größere Oberfläche der Portalachse eine bessere Abfuhr der durch die Hydromotoren erzeugten Wärme erzielt, so daß der Ölkühler kleiner gehalten werden kann. Infolge des großen Ölvolumens wird außerdem die Geräuschentwicklung des Antriebs wesentlich verringert.

In diesem Zusammenhang ist es vorteilhaft, die Kröpfungsarme der Portalachse hohl auszubilden und innerhalb jedes Kröpfungsarms ein Vorgelege anzuordnen, welches die Verbindung der Sekundäreinheit mit dem jeweils anzutreibenden Rad bzw. Radsatz herstellt.

Gleichzeitig besteht die Möglichkeit, mit diesem Vorgelege allein oder als Bestandteil einer mechanischen Getriebeanordnung, die beispielsweise eine zusätzliche Übersetzung in der Radnabe aufweisen kann, die Drehzahl des Antriebsrades mit geringsten Verlusten zu erhöhen. Als Übersetzung innerhalb der Radnabe ist z.B. ein Planetengetriebe denkbar.

Die Hydromotoren jeder Sekundäreinheit werden bei Verwendung einer massiven Portalachse vorzugsweise außerhalb und beidseitig derselben angeordnet. Der tiefer gelegene abgekröpfte Teil einer massiven Portalachse kann entsprechend seiner Festigkeit mit kleinstmöglichem Durchmesser ausgebildet werden, so daß der Mittelgang weiter abgesenkt werden kann.

Es besteht dann auch die Möglichkeit, die Hydromotoren auf einer Seite der Achse anzubringen. Dies ist beispielsweise bei einem Doppelachsantrieb vorteilhaft, bei dem die Motoren auf den einander abgewandten Seiten der Achsen angebracht werden.

Bei Anordnung der Hydromotoren außerhalb der Portalachse besteht die Möglichkeit, dieselben im wesentlich parallel zur Portalachse auf einer Seite oder beidseitig derselben anzubringen. Ein Stirnradvorgelege, das zumindest teilweise innerhalb des hohl ausgebildeten Kröpfungsarms der Portalachse untergebracht werden kann, übernimmt die Verbindung der Motoren und des anzutreibenden Rades.

Eine Ausrichtung der Hydromotoren im wesentlichen in Fahrzeuglängsrichtung ein- oder beidseitig der Portalachse ist beispielsweise dann vorteilhaft, wenn mehr als zwei Hydromotoren verwendet werden, deren Länge zwischen den beiden Kröpfungsarmen der Portalachse nicht mehr unterzubringen ist. Außerdem bietet eine solche Anordnung der Hydromotoren eine größere Freiheit in der Gestaltung des Hinterachsaggregates und die Möglichkeit, den Mittelgang breiter als bisher auszubilden.

Im folgenden wird die Erfindung anhand dreier Ausführungsbeispiele unter Bezugnahme auf die Zeichnungen

0110043

näher beschrieben, wobei gleiche Bauteile mit gleichen Bezugszeichen versehen sind.

Es zeigt

Fig. 1        eine Seitenansicht eines erfindungsgemäßen Stadtomnibusses in schematischer Darstellung,

Fig. 2        eine Untersicht im Schnitt des in Fig. 1 gezeigten Stadtomnibusses in schematischer Darstellung mit einer Anordnung der Hydromotoren gemäß eines ersten Ausführungsbeispieles der Erfindung,

Fig. 3        einen vergrößerten Schnitt entlang der Linie III-III in Fig. 2,

Fig. 4        eine Draufsicht im Schnitt des in Fig. 3 dargestellten Hinterachsaggregates mit einer Anordnung der Hydromotoren gemäß eines zweiten Ausführungsbeispieles der Erfindung, und

Fig. 5        eine Draufsicht im Schnitt des in Fig. 4 dargestellten Hinterachsaggregates mit einer Anordnung der Hydromotoren gemäß einem dritten Ausführungsbeispiel der Erfindung.

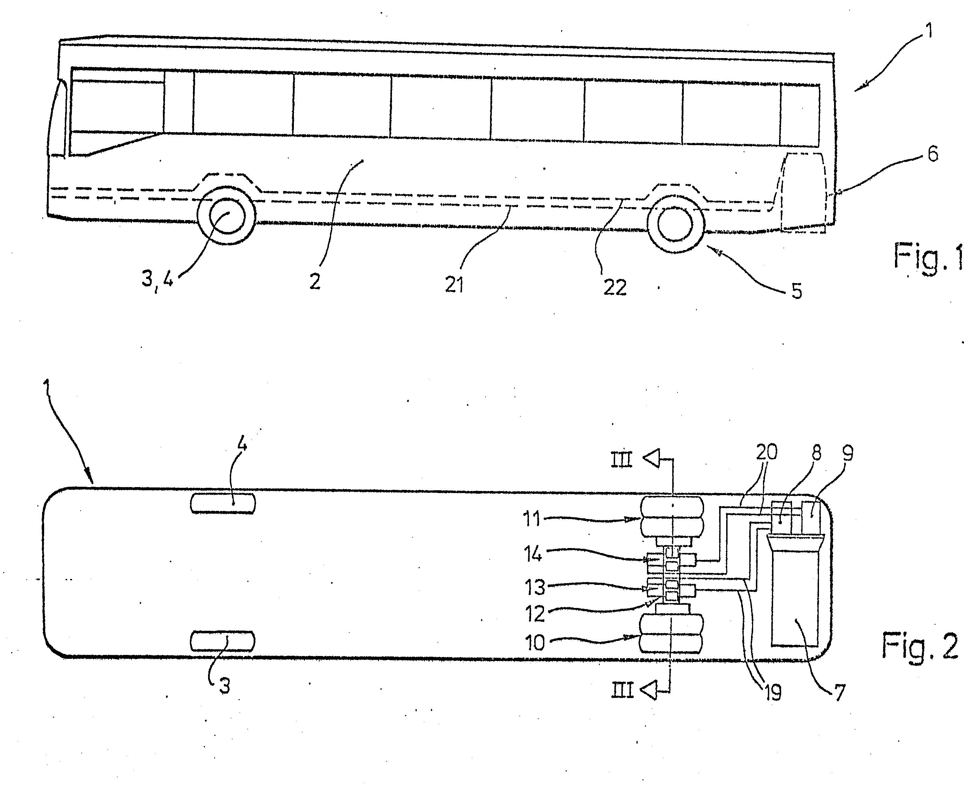

Die Figuren 1 und 2 zeigen gemäß einem ersten Ausführungsbeispiel der Erfindung einen Stadtomnibus 1 mit einem hydrostatischen Antrieb in schematischer Darstellung mit einem Aufbau 2, zwei Vorderrädern 3, 4, einem Hinterachsaggregat 5 und einem Antriebsaggregat 6. Letzteres ist im Heck des Omnibusses 1 hinter dem Hinterachsaggregat 5 stehend angeordnet und besteht im wesentlichen aus einem Verbrennungsmotor 7 incl. Verteilergetriebe und zwei von demselben angetriebenen Hydropumpen 8,
9, welche die Primäreinheit des hydrostatischen Antriebes
darstellen. Das Hinterachsaggregat 5 weist zwillingsbereifte Radsätze 10, 11 mit Standardabmessungen und eine
hohl ausgebildete Portalachse 12 auf, innerhalb derer
zwei Sekundäreinheiten 13, 14 des hydrostatischen Antriebs zum Antrieb je eines der Radsätze 10, 11 angeordnet sind. Die Sekundäreinheiten 13, 14 umfassen jeweils
zwei Hydromotoren 15, 16 bzw. 17, 18 und sind durch je
einen Hydraulikkreislauf 19 bzw. 20 mit je einer der
Hydropumpen 8, 9 verbunden. Jeder Hydraulik-Kreislauf
besteht aus einer Hochdruck- und einer Niederdruckleitung.
Die Hydromotoren 15, 16 bzw. 17, 18 sind hierbei mit den
Hydropumpen 8, 9 parallelgeschaltet.
Die untere durchbrochene Linie in Fig. 1 stellt den
Boden eines durchgehend ebenen Mittelganges 21 und die
obere durchbrochene Linie die beidseitig des Mittelganges 21 angeordneten Sitzplatzreihen 22 dar.

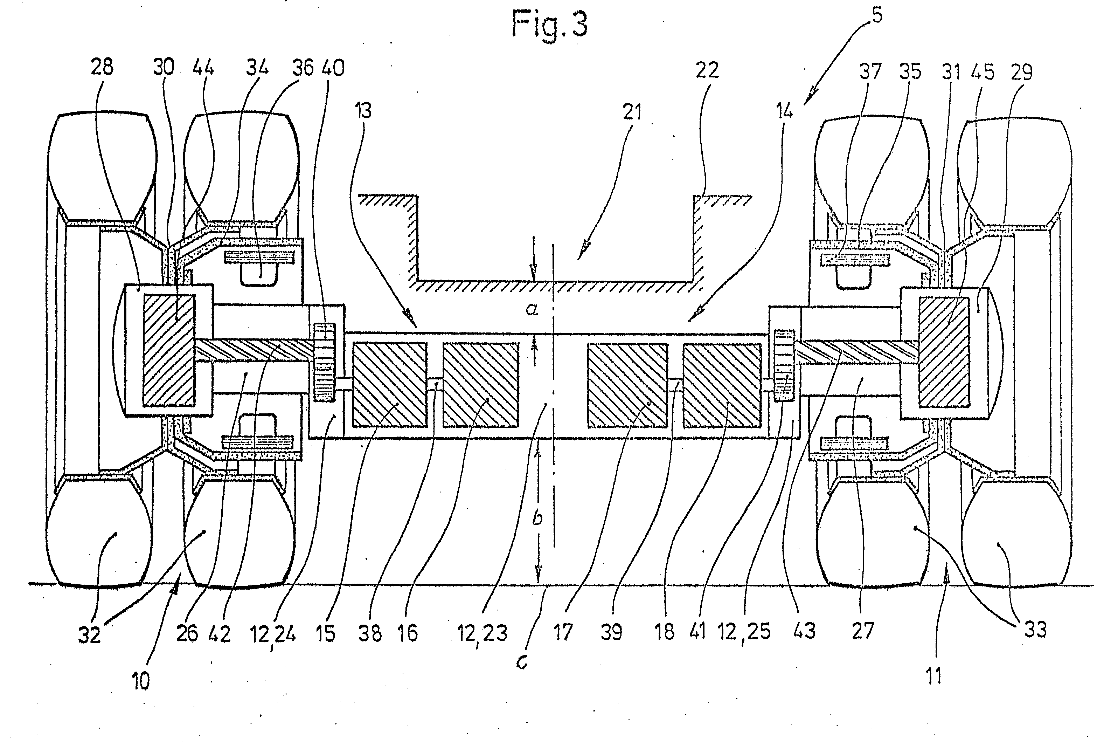

Fig. 3 zeigt einen vergrößerten Vertikalschnitt des
Hinterachsaggregates 5, dessen Portalachse 12 aus einem
tiefer liegenden abgekröpften Teil 23 besteht, an dessen beiden Enden sich je ein Kröpfungsarm 24 bzw. 25 anschließt. Der Teil 23 und die Arme 24, 25 sind hohl ausgebildet. Jeder der Kröpfungsarme geht in ein gegenüber
dem tiefer liegenden abgekröpften Teil 23 nach oben versetztes horizontales Achsende 26 bzw. 27 über, auf dem
eine Radnabe 28 bzw. 29 drehbar gelagert ist. Die Lagerung ist hierbei nicht dargestellt. Mit jeder Radnabe 28,
29 ist ein Satz Felgen 30 bzw. 31 zur Aufnahme der Zwillingsbereifung 32 bzw. 33 verbunden. Innerhalb der einander zugewandten Felgen der Felgensätze 30, 31 ist jeweils eine Bremstrommel 34 bzw. 35 und eine Bremsvorrichtung 36 bzw. 37 angeordnet.

Die Hydromotoren 15,16 bzw. 17,18 jeder Sekundäreinheit 13,14 sind innerhalb des tiefer liegenden abgekröpften Teiles 23 der Portalachse 12 hintereinander angeordnet und durch eine gemeinsame Welle 38 bzw.39 mechanisch gekoppelt. In jedem Kröpfungsarm 24,25 ist ein Stirnradvorgelege 40 bzw.41 untergebracht, dessen unteres Zahnrad mit der Welle 38 bzw.39 und dessen oberes Zahnrad mit einer innerhalb des jeweiligen Achsendes 26 bzw.27 angeordneten Treibwelle 42 bzw.43 verbunden ist. Diese Treibwellen 42,43 stehen mit je einem hier nur angedeuteten Getriebe 44 bzw. 45 innerhalb der Radnaben 28 bzw. 29 in Verbindung. Jedes Getriebe 44, 45 besteht aus einem mit einer Innenverzahnung der jeweiligen Radnabe 28 bzw. 29 kämmenden oberen Zahnrad, welches mit zwei kleineren, mit gegenseitigem Abstand angeordneten unteren Zahnrädern gleichen Durchmessers in kämmender Verbindung steht. Ein mit der jeweiligen Treibwelle 42 bzw. 43 verbundenes zentrales Zahnrad ist zwischen den beiden unteren Zahnrädern mit diesen kämmend angeordnet. Diese Getriebeausführung weist gegenüber einem Planetengetriebe Vorteile hinsichtlich der Geräuschbildung beispielsweise auf.

Wie aus Fig. 3 deutlich ersichtlich, ist der Mittelgang 21 des Omnibusses 1 bis auf einen dem erforderlichen Federweg entsprechenden Abstand "a" von dem tiefer liegenden abgekröpften Teil 23 der Portalachse 12 abgesenkt. Der tiefer liegende Teil 23 ist mit einem der erforderlichen Bodenfreiheit entsprechenden Abstand "b" von der Fahrbahn "c" angeordnet.

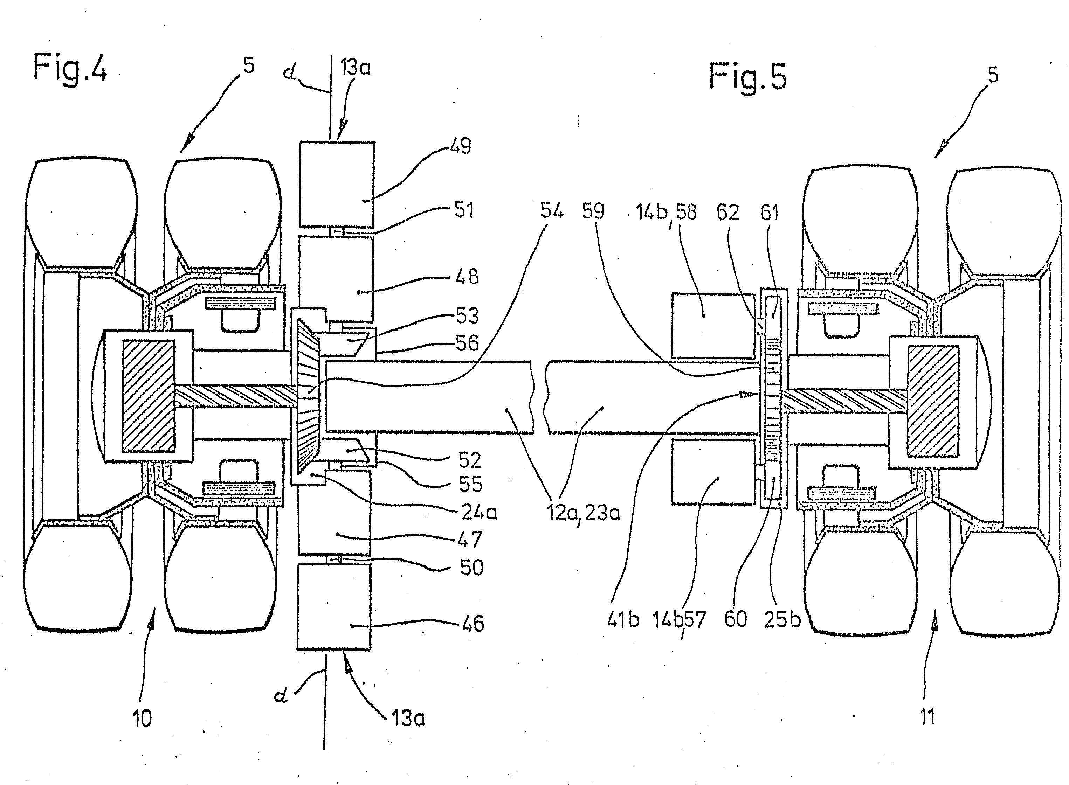

Ein zweites und ein drittes Ausführungsbeispiel der Erfindung werden in den Figuren 4 und 5 anhand einer Draufsicht im Schnitt jeweils einer Hälfte eines Hinterachsaggregates dargestellt. Im folgenden wird lediglich auf die vom ersten Ausführungsbeispiel abweichenden Bauteile eingegangen.

Gemäß Fig. 4 besteht eine dem Radsatz 10 zugeordnete Sekundäreinheit 13a aus insgesamt vier Hydromotoren, von denen jeweils zwei Motoren 46, 47 bzw. 48, 49 beidseitig einer Portalachse 12a angeordnet sind, deren tiefer liegender abgekröpfter Teil 23a massiv ausgebildet ist. Die Hydromotoren 46,47,48,49 sind in einer horizontalen Ebene mit dem tiefer liegenden abgekröpften Teil 23a angeordnet. Sie weisen den gleichen Durchmesser wie dieser Teil 23a auf und stehen somit weder an dessen Unter- noch an dessen Oberseite über.

Die Hydromotoren 46,47 sind durch eine Welle 50 und die Hydromotoren 48,49 durch eine Welle 51 mechanisch miteinander gekoppelt. Das freie Ende jeder Welle ist mit einem Kegelrad 52 bzw. 53 verbunden. Beide Kegelräder kämmen mit einem auf der Treibwelle 42 sitzenden Kegelrad 54, das in einem hohlen Kröpfungsarm 24a der massiven Portalachse 12a untergebracht ist. Aus der gegenseitigen Anordnung der Hydromotoren 46,47,48,49 und dem Achsende 26 der Portalachse 12a folgt, daß die Kegelräder 52,53 unterhalb der Achse des Kegelrades 54 mit demselben kämmen. Dies ist durch die Schraffur verdeutlicht. Je ein Gehäuse 55 bzw. 56 umschließt die Kegelräder 52, 53.

Die Verwendung einer massiven Portalachse 12a und die Anordnung der Hydromotoren 46,47,48,49 außerhalb derselben erlaubt eine weitere Absenkung des Mittelganges im Vergleich zu dem in den Fig. 1 bis 3 dargestellten Ausführungsbeispiel. Der tiefer liegende abgekröpfte Teil 23a der Achse kann hierbei mit geringstmöglichem Durchmesser ausgebildet werden. Durch entsprechende Anzahl von Hydromotoren ist es möglich, deren Durchmesser dem des tiefer liegenden abgekröpften Achsteils anzupassen. Der Abstand des Mittelgang-Bodens ist demzufolge lediglich durch den erforderlichen Federweg, den Durchmesser des tiefer liegenden abgekröpften Achsteils und dessen Bodenfreiheit bestimmt.

Durch die Anordnung der Hydromotoren 46,47,48,49 in Fahrzeuglängsrichtung ist es möglich, den Mittelgang über das bisher mögliche Maß hinaus so weit zu verbreitern, daß seine Längskanten "d" nahe dem zugeordneten Kröpfungsarm 24a angeordnet sind. Eine derartige Ausführung ist besonders für Flugplatz-Omnibusse interessant, bei denen zur Kapazitätsvergrößerung sehr wenig Sitzplätze verwendet werden.

Figur 5 zeigt als Sekundäreinheit 14b zwei Hydromotoren 57,58, die beidseitig des tiefer liegenden abgekröpften Teiles 23a der massiven Portalachse 12a parallel zu derselben angeordnet sind. In einem hohlen Kröpfungsarm 25b der massiven Portalachse 12a ist ein Stirnradvorgelege 41b angeordnet, das aus einem auf der Treibwelle 43 sitzenden zentralen Stirnrad 59 besteht, welches mit beidseitig angeordneten Stirnrädern 60 bzw. 61 kämmt. Die Stirnräder 60, 61 sind über je eine Welle 62 bzw. 63 mit den Hydromotoren 57, 58 verbunden. Auch in diesem Ausführungsbeispiel befinden sich die Hydromotoren 57, 58 auf gleicher Höhe mit dem tiefer liegenden abgekröpften Teil 23a der Portalachse 12a, so daß die Stirnräder 60, 61 unterhalb der Achse des zentralen Stirnrades sitzen.

Aus der obigen Beschreibung und den Figuren ist deutlich zu erkennen, daß die Anordnung der Hydromotoren innerhalb des tiefer liegenden abgekröpften Teiles der Portalachse bzw. auf gleicher Höhe mit diesem Teil ein Absenken des Mittelganges 21 auf ein bisher nicht erreichbares Tiefstmaß bei gleichzeitiger Ausbildung mit durchgehend ebenen Boden ermöglicht. Ein derartig abgesenkter durchgehend ebener Mittelgang ermöglicht den Fahrgästen ein schnelleres Ein- und Aussteigen bei gleichzeitig erhöhter Bequemlichkeit und Sicherheit.
Die Wartezeiten an den Haltestellen werden verkürzt.

Der niedrigere Mittelgang bedeutet insbesondere bei
vollbeladenem Omnibus eine niedrigere Schwerpunktlage,
wodurch höhere Kurvengeschwindigkeiten erreicht werden
können. Für Doppeldeckeromnibusse ist diese niedrige
Schwerpunktlage besonders vorteilhaft, da hier die
Forderung nach guten Fahreigenschaften und hoher Sicherheit äußerst wichtig ist. Insbesondere kann der
Grenzkippwinkel vergrößert bzw. die Forderung nach einer bestimmten Größe desselben    leichter erfüllt werden. Es
ist auch möglich, unter Beibehaltung der bisherigen
Bauhöhe des Busses, die Stehhöhe im Unter- und/oder
Oberdeck zu vergrößern.

Die Verwendung mehrerer kleiner Hydromotoren gestattet
infolge ihrer höheren maximal zulässigen Drehzahl im
Vergleich zu einem größeren Motor den Einsatz eines
leistungsstärkeren Antriebsaggregates. Somit können
höhere Geschwindigkeiten erzielt werden.

Im folgenden wird die Funktion des Stadtomnibusses mit
hydrostatischem Antrieb gemäß der vorliegenden Erfindung kurz skizziert.
Die Hydropumpen 8, 9 nehmen infolge ihrer mechanischen
Koppelung mit dem Verbrennungsmotor 7 bei dessen Betrieb
mechanische Bewegungsenergie auf und wandeln dieselbe
aufgrund ihrer Verdrängungswirkung auf ein Hydrauliköl in
hydraulische Energie um. Hierbei erfolgt in Abhängigkeit
von dem Drehmoment des Verbrennungsmotors eine Erhöhung
des statischen Druckes des Hydrauliköls. Gleichzeitig
wird entsprechend dem Schluckvolumen und der Drehzahl
der Hydropumpe bzw. der Drehzahl des Verbrennungsmotors
das Hydrauliköl zum Zwecke der Leistungsübertragung zu den hydraulisch parallel geschalteten Hydromotoren der jeweiligen Sekundäreinheit über die Hochdruckleitung des zugeordneten Hydraulik-Kreislaufes gefördert. In den eine Umkehrung der Hydropumpen darstellenden Hydromotoren erfolgt durch Entspannung des Drucköls eine Umwandlung der hydraulischen in mechanische Energie. Die vorzugsweise in Axialkolbenbauweise ausgeführten Hydromotoren werden hierbei in Drehung versetzt. Das Hydrauliköl strömt durch die Niederdruckleitung zu den Hydropumpen zurück. Die Drehbewegung der Hydromotoren beider Sekundäreinheiten 13,14 bzw. 13a bzw. 14b wird über die Vorgelege 40,41 bzw. 52,53,54 bzw. 41b, die Treibwellen 42, 43 und die Getriebe 44,45 auf die Radsätze 10,11 der Antriebsachse zum Antrieb des Stadtomnibusses 1 übertragen. Vorgelege und Getriebe dienen hierbei zur Geschwindigkeitsübersetzung. Durch Veränderung des Schluckvolumens der Hydropumpen und/oder der Hydromotoren ist eine stufenlose Regelung der Geschwindigkeit und damit des Drehmomentes möglich. Natürlich kann auch die Drehzahl des Verbrennungsmotors verändert werden.

Rein theoretisch betrachtet lassen sich bei einer hydraulischen Parallelschaltung mehrerer kleiner Hydromotoren die gleiche Geschwindigkeit und das gleiche Drehmoment wie mit einem einzigen großen Hydromotor erzielen. Bei unveränderter Förderleistung des Hydropumpen, d.h. bei gleichbleibendem Druck und Fördervolumen pro Zeiteinheit des Hydrauliköls, und bei Verwendung zweier Hydromotoren mit jeweils halbem Schluckvolumen beispielsweise im Vergleich zu einem einzigen Hydromotor erhält infolge der hydraulischen Parallelschaltung jeder Motor das halbe Fördervolumen pro Zeiteinheit an Hydrauliköl. Daraus folgt, daß die Drehzahl beider Hydromotoren im Vergleich zu einem einzigen Hydromotor doppelten Schluckvolumens unverändert bleibt. Ebenfalls bleibt das von beiden Hydromotoren insgesamt abgegebene Drehmoment unverändert, da jeder der Motoren

0110043

halben Schluckvolumens mit vollem Hydraulikdruck beaufschlagt wird und deshalb das halbe Drehmoment liefert. Durch die mechanische Kopplung beider Motoren addieren sich beide Drehmomente. Natürlich ist es auch möglich, Hydromotoren unterschiedlichen Schluckvolumens zu verwenden. Hierbei muß durch geeignete Steuereinrichtungen für entsprechend unterschiedliches Fördervolumen pro Zeiteinheit gesorgt werden, so daß beide mechanisch gekoppelten Motoren mit gleicher Drehzahl laufen, die gemäß vorstehender Ausführungen bei der Erfindung höher liegen kann, als diejenige eines einzigen Hydromotors gleicher Leistung.

Selbstverständlich können die bekannten Steuer-, Regelungs- und Umschalteinrichtungen, wie beispielsweise eine hydraulische Umschaltung der Hydromotoren auf Reihenschaltung zur Erzielung einer zusätzlichen Geschwindigkeitsstufe in dem soeben beschriebenen hydrostatischen Antrieb verwendet werden. Es ist natürlich auch möglich, mehr als zwei Hydropumpen zu verwenden. Auch kann durch Zu- und Abschaltung von hydraulisch parallelgeschalteten Hydromotoren innerhalb jeder Sekundäreinheit eine nochmalige Geschwindigkeitsabstufung erreicht werden.

PATENTANWÄLTE
EUROPEAN PATENT ATTORNEYS

A. GRÜNECKER, DIPL.-ING.
DR. H. KINKELDEY, DIPL.-ING.
DR. W. STOCKMAIR, DIPL.-ING., AE E (CALTECH)
DR. K. SCHUMANN, DIPL.-PHYS.
P. H. JAKOB, DIPL.-ING.
DR. G. BEZOLD, DIPL.-CHEM.
W. MEISTER, DIPL.-ING.
H. HILGERS, DIPL.-ING.
DR. H. MEYER-PLATH, DIPL.-ING.

8000 MÜNCHEN 22
MAXIMILIANSTRASSE 43

EP 1247
O 130

Karl Kässbohrer Fahrzeugwerke GmbH
Peter-Schmid-Str. 13, 7900 Ulm (Donau)

Stadtomnibus mit hydrostatischem Antrieb

Patentansprüche

1. Stadtomnibus mit hydrostatischem Antrieb, der wenigstens eine vom Fahrzeugmotor angetriebene Primäreinheit und jeweils eine mit derselben hydraulisch verbundene Sekundäreinheit für den Antrieb eines Rades bzw. Radsatzes jeweils einer Seite jeder Antriebsachse aufweist, dadurch g e - k e n n z e i c h n e t , daß jede Antriebsachse als Portalachse (12,12a) ausgebildet ist und jede Sekundäreinheit (13,14,13a,14b) wenigstens zwei mechanisch miteinander gekoppelte und hydraulisch parallelgeschaltete Hydromotoren (15,16 bzw. 17,18; 57,58) umfaßt, die an der Portalachse (12,12a) so angeordnet sind, daß sie deren tieferliegenden abgekröpften Teil (23,23a) der Höhe nach im wesentlichen nicht überragen.

2. Stadtomnibus nach Anspruch 1, dadurch g e k e n n - z e i c h n e t , daß der tieferliegende abgekröpfte Teil (23) der Portalachse (12) hohl ausgebildet ist und die Sekundäreinheiten (13,14) mit jeweils hintereinander angeordneten Hydromotoren (15,16 bzw. 17,18) innerhalb dieses Teiles (23) aufgenommen sind.

3. Stadtomnibus nach Anspruch 1 oder 2, dadurch g e - k e n n z e i c h n e t , daß eine mechanische Getrie- beanordnung mit wenigstens einem Vorgelege (40,41; 52,53,54; 41b) zwischen jedem anzutreibenden Rad bzw. Radsatz (10,11) und der jeweiligen Sekundäreinheit (13,14 bzw. 13a,14b) angeordnet ist.

4. Stadtomnibus nach Anspruch 3, dadurch g e k e n n - z e i c h n e t , die Kröpfungsarme (24,25;24a;25b) der Portalachse (12,12a) hohl ausgebildet sind und innerhalb jedes Kröpfungsarmes das zugeordnete Vorgelege (40 bzw. 41; 52,53,54; 41a) angeordnet ist.

5. Stadtomnibus nach wenigstens einem der Ansprüche 1, 3 und 4, dadurch g e k e n n z e i c h n e t , daß die Hydromotoren (46,47,48,49; 57,58) jeder Sekundäreinheit (13a;14b) außerhalb der Portalachse (12a) beidseitig derselben angeordnet sind.

6. Stadtomnibus nach wenigstens einem der Ansprüche 1, 3 und 4, dadurch g e k e n n z e i c h n e t , daß die Hydromotoren jeder Sekundäreinheit außerhalb der Portalachse auf einer Seite derselben angeordnet sind.

7. Stadtomnibus nach wenigstens einem der Ansprüche 1, 3 bis 6, dadurch g e k e n n z e i c h n e t , daß die Hydromotoren (57,58) jeder Sekundäreinheit (14b) im wesentlichen parallel zur Portalachse (12a) angeordnet sind.

8. Stadtomnibus nach wenigstens einem der Ansprüche 1, 3 bis 6, dadurch g e k e n n z e i c h n e t, daß die Hydromotoren (46,47,48,49) jeder Sekundäreinheit (13a) im wesentlichen in Fahrzeuglängsrichtung ausge-richtet sind.

0110043

Fig.1

Fig.2

Fig.3

Fig.5

Fig.4